# EUROPEAN PATENT SPECIFICATION

(11) **EP 3 634 913 B1**
(45) Date of publication and mention of the grant of the patent: **08.12.2021**
(21) Application number: 18735708.2
(22) Date of filing: 06.06.2018
(51) Int. Cl.: C02F 1/00

(54) **PERCOLATION-TYPE FILTRATION DEVICE**
PERKOLATIONSFILTERUNGSVORRICHTUNG
DISPOSITIF DE FILTRATION DE TYPE À PERCOLATION

(30) Priority: 06.06.2017 IT 201700061699
(43) Date of publication of application: 15.04.2020
(73) Proprietor: Laica S.p.A., 36021 Barbarano Vicentino (VI) (IT)
(72) Inventor: MORETTO, Maurizio, I-36100 Vicenza (IT)
(74) Representative: Locas, Davide
(86) International application number: PCT/IB2018/054051
(87) International publication number: WO 2018/224978

(56) References cited:
- DE-A1-102009 000 231

## Description

The invention relates to a percolation-type filtration device for filtering water and other beverages, of the type comprising a shut-off valve.

Percolation-type filtration systems that are typically jug-shaped comprising a divider that divides the jug into an upper basin, which collects water to be filtered, and a lower basin that collects filtered water are already known. The two basins communicate with one another exclusively via a duct, in which a filter cartridge is arranged, such that the entire flow passes therethrough.

In order to avoid the jug being used without the relative filter cartridge or, more generally, with an incompatible filter cartridge type, a normally closed shut-off valve is arranged in the duct, downstream of the cartridge, said valve being made to open by an enabler, generally belonging to the filter cartridge, when the filter cartridge is inserted in the duct. A first example of this technology is described in international patent application WO 2009 015679.

A further example is presented by the German patent application DE 10 2009 000231 or by the international patent application WO 2016 120174.

In this second example, the valve is housed within a passage made in the divider downstream of the cartridge. In order to reach the valve, bringing it into the open position, the cartridges are provided with a tube-shaped extension which is inserted into the passage until it reaches a working portion of the valve. In this way, the valve is made to rotate around an axis parallel to the tube of the cartridge. The valve is coupled, at the base of the relative seat, to a series of inclined surfaces which, following the rotation of the valve, cause said valve to lift, thus opening the valve duct.

The valve is rotated as a direct consequence of the insertion of the cartridge, thereby converting a vertical positioning movement of the cartridge in the relative seat into a rotation of the valve. In order to perform such an operation, the cartridge, or other actuator, is provided with a corresponding spiralled surface that is shaped and dimensioned so as to be coupled to complementary surfaces formed on the working portion of the valve.

However, the rotation of the valve is not always accompanied by correct translational movement, and cases can arise in which the valve is opened involuntarily or at least incorrectly. For example, situations can occur in which the shutter can become wedged as a result of lime scale or other small impurities accumulating while it is being used.

It is also desirable to provide filtration jugs and other similar systems in which operation without a cartridge or with an incorrect cartridge is more effectively prevented.

The object of the present invention is to provide a percolation-type filtration device suitable for satisfying these requirements, which can at the same time be produced economically.

This object and further advantages are achieved by a percolation-type filtration device comprising a divider that divides the device into an upper basin, which collects water to be filtered, and a lower basin that collects filtered water, the two basins communicating with one another via a duct defined in said divider, which duct forms a seat for receiving a filter cartridge, a valve passage being defined in said divider and comprising a flow shut-off valve for selectively allowing/preventing the passage of liquid between the upper basin and the lower basin, said flow shut-off valve being designed to be opened by rotating a relative shutter, and comprising an abutting element configured to prevent an axial translational movement of the shutter away from a closure portion when said shutter is closed.

On account of the presence of the abutting element, the shutter can open only by means of rotation, wherein, by contrast, it is not possible to move said shutter away from the closure portion on which it rests in order to close the valve passage.

When, instead, the shutter is rotated, this can result in a successive translational movement, or at the least the opening of the valve passage can be permitted.

According to the invention, the abutting element is designed so as to prevent an axial translational movement towards the top of the shutter. It is clear that, in a percolation-type filtration device, the direction towards the top is unequivocally determined by the flow path through the filter cartridge, which functions by gravity.

The shutter is rotatable around an axis of rotation parallel to the valve passage, with the flow shut-off valve being designed such that it can be opened by rotating the shutter around the axis of rotation of the shutter.

Preferably, the valve is designed such that it can be opened solely by being rotated around said axis.

In some embodiments, the abutting element and the closure portion define two guide surfaces between which the shutter is held and guided.

In one embodiment, the shutter is held by two guide surfaces, preferably defined by the abutting element and by the closure portion.

The shutter preferably comprises an enlarged segment which abuts said abutting element when said shutter is urged in an axial direction and is closed. In this way, simple assembly and simple production of the system for blocking the shutter is permitted. In some embodiments, the enlarged segment abuts the abutting element when the shutter is closed and, from that position, is urged in an axial direction towards a relative open position. In this way, the abutting element is able to act when the shutter is closed, preventing it from opening.

In accordance with further aspects of the invention, the abutting element is arranged in a position opposite the closure portion with respect to the enlarged segment of the shutter. In other words, the enlarged segment is interposed between the abutting element and the closure portion and, in this way, the enlarged segment is enclosed between the abutting element and the closure portion at least when the shutter is closed.

In one embodiment, the enlarged segment and the abutting element are shaped such that the enlarged segment slides over the abutting element as the valve opens, thus making it possible to provide a guide element for suitably guiding the movement of the shutter.

In accordance with a further aspect, the abutting element has an inclined surface shaped such that, during an axial translational movement of the shutter associated with the rotation of said shutter, said enlarged segment stays in contact with said inclined surface. This feature makes it possible to perform the opening by means of a rotary-translational movement, thus making it possible to open the valve passage in a precise manner, with a system that suitably guides the shutter.

The enlarged segment preferably has an auxiliary inclined surface, the shape of which is complementary to that of said inclined surface.

In one embodiment, the percolation-type filtration device further comprises a conversion mechanism for converting a rotary motion of the shutter into an axial translational movement such that said shutter is moved away from a closure portion formed in said valve passage. The abutting element and the enlarged segment preferably have a plurality of ridges and recesses extending in series around the axis of rotation of said shutter.

On account of this feature it is possible for the valve passage to be opened in a precise manner.

In accordance with a further aspect, the conversion mechanism is formed on a support element of said shutter that is fitted in a cap manner in said valve passage from the side opposite the side on which the cartridge is introduced. In accordance with a preferred embodiment, the conversion mechanism is able to convert a rotation around an axis parallel to the valve passage into a vertical translation along said axis.

This solution advantageously allows simple assembly of the structure.

The conversion mechanism preferably comprises a second pair of inclined surfaces having complementary shapes, said surfaces being in full contact with one another when the valve is closed and only being in partial contact with one another when the valve is open. This feature makes it possible to obtain an effective and reliable transition between the open and closed positions.

In accordance with a further aspect, the inclined surfaces are formed on a closure portion of the valve passage and on the bottom wall of the valve, respectively, thus being integrated with the overall structure of the filtration device. The inclined surfaces preferably extend in a helical manner around the axis of rotation of said shutter.

In one embodiment, the abutting element is made in said support element in a position opposite the closure portion of said shutter, such that the valve system can be assembled first and then the final assembly can be accomplished.

The support element preferably comprises a filter situated downstream of said shutter, thus allowing further filtration and preventing access towards the shutter from opposite the manoeuvring portion.

In accordance with a further aspect, the abutting element is made at one end of a sleeve portion of the valve passage.

The features and advantages of the invention will become clear from the following detailed description of some of the preferred embodiments thereof, shown by way of non-restrictive example with reference to the accompanying drawings, in which:
- figures 1A and 1B are sectional side views of a filtration device according to the present invention, with a relative filter cartridge and with an enabler element intended to open a valve passage, respectively;
- figures 2A and 2B are two relative sectional views of a valve passage, these being details of figures 1A and 1B respectively, in the closed position and in the open position as a result of the enabler element of figure 1B being used;
- figure 3 is a front view of a support element and of an abutting element, these being details of the filtration device of the present invention;
- figures 4A to 4C are views from different perspectives of a shutter, this being a detail of the filtration device of the present invention;
- figures 5A to 5D are a sectional view of a valve passage, a sectional view of the valve passage with the relative enabler element, a perspective view of an abutting element, and a perspective view of a support element according to a first variant of the present invention;
- figures 6A to 6F are, respectively, a sectional view of a valve passage, three views of a shutter, a perspective view of an abutting element, and a perspective view of a support element in accordance with a first variant of the present invention;
- figure 7 is a sectional view showing a valve passage of a filtration system according to an alternative embodiment of the present invention;
- figure 8 is a sectional view showing a valve passage of a filtration system according to a further alternative embodiment of the present invention;
- figures 9A to 9C are a perspective view, a partially interrupted side view, and a front sectional view, of a valve passage in the closed configuration in accordance with another embodiment of the present invention;
- figures 10A to 10C are a perspective view, a partially interrupted side view, and a front sectional view, of the valve passage according to the embodiment of figure 9A in the open configuration;
- figures 11A and 11B are two perspective views of a divider with the valve passage in the closed and open position, respectively, again in accordance with a further variant of the filtration device of the present invention; and
- figures 12 to 14 are perspective views, figure 13 being a sectional view, of further variants of the present invention.

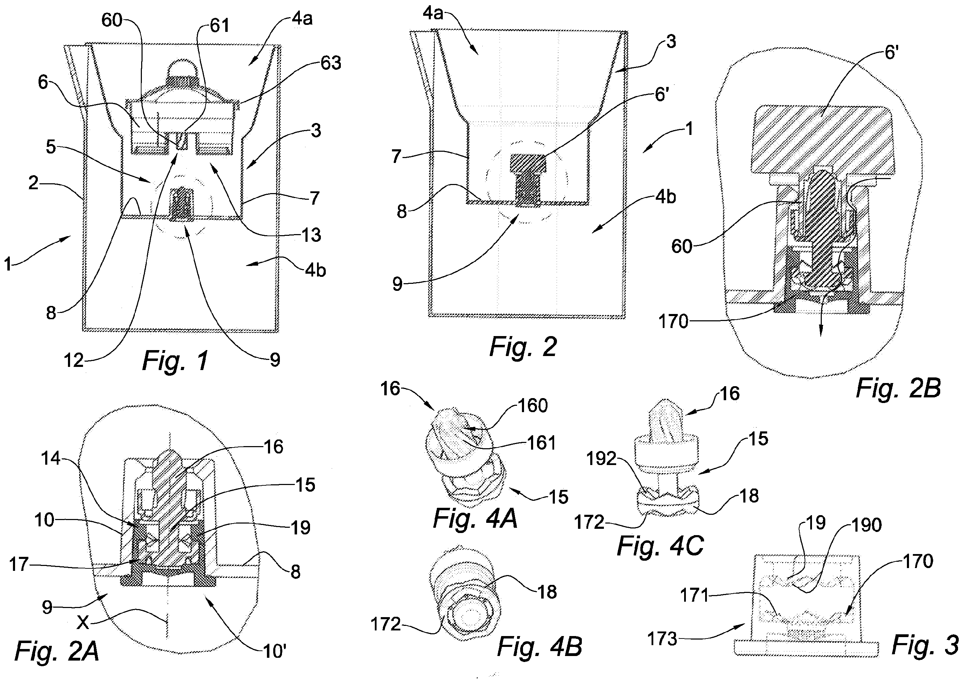

In figure 1, reference sign 1 denotes a percolation-type filtration device as a whole, the device comprising a jug 2, inside which a divider 3 (hopper) is arranged, which divides the jug 2 into an upper basin 4a, which collects water to be filtered, and a lower basin 4b that collects filtered water. The two basins 4a,b communicate exclusively via a duct which forms a seat 5 for receiving a filter cartridge 6. The cartridge 6 has a sealing edge 63, which can be engaged with a mouth of the seat so as to cause the water poured into the basin 4a to flow towards the inside of the cartridge.

The seat 5 has a side casing 7 and a base 8, into which a valve passage 9 opens and constitutes an outflow opening of the upper basin towards the lower basin, with preferably just one such opening being provided. The valve passage 9 preferably has a generally cylindrical shape with a sleeve portion 10 protruding towards the cartridge 6, where it can be received in a recess in the form of a cavity 12 in the base 13 of said cartridge.

In accordance with a preferred embodiment, the valve passage 9 is formed through a separate cylindrical body 10', which can be inserted, for example with little interference, in the sleeve portion 10 of the divider 3, as shown schematically in figure 2A.

Still with reference to figure 2A, a valve seat 14 is formed in the distal part of the valve passage 9 with respect to the cartridge 6, on which valve seat a valve shutter 15 normally sits. The shutter 15, shown in detail in figures 4A to 4C, preferably has a manoeuvring portion 16 that extends into the passage 9 such that, by acting on the portion 16, it is possible manoeuvre the shutter 15 to open, thus opening the valve seat 14. The shutter 15 together with the relative seat 14 define a flow shut-off valve for selectively allowing/preventing the passage of liquid between the upper basin 4a and the lower basin 4b.

The shutter 15 can be formed in accordance with that described in international patent application WO 2016 120174.

Thus, in one embodiment, the shutter can be enabled following a rotation thereof, generated by the interaction between surfaces 161 extending in a helical manner that are formed, respectively, on the manoeuvring portion 16 of the shutter and on an enabler element extending for example from the base of the filter cartridge. Corresponding recesses 160 are defined between the surfaces 161 extending in a helical manner, wherein ribs 61 of complementary shape can be received in said recesses, said ribs being shown schematically solely in figure 1 and being formed on an appendage 60 of cylindrical shape protruding from the base of the cartridge 6 that defines the actuation element. In an alternative as shown in figure 2B, the appendage 60 can be formed on an enabler element 6' that is formed as a body separate from the cartridge 6.

In accordance with a preferred embodiment, the filtration device also comprises a conversion mechanism 17, shown in greater detail hereinafter, for converting a rotary motion of the shutter 15 into an axial translational movement thereof. The conversion mechanism 17 is able to convert a rotation about an axis X parallel to the valve passage into a vertical translational movement along the axis X itself.

As can be seen from the example of figures 2A, 2B and 3, when the appendage 60 of the cartridge 6 or of the enabler element 6' is inserted into the valve passage 9, the shutter 15, by means of the aforementioned mechanism, is moved away from a closure portion 170 formed in the valve passage 9. For example, the liquid can run through the passage shown schematically in figure 2B.

Still with reference to the above-mentioned drawings, the device according to the present invention comprises an abutting element 19 which makes it possible, by means of its configuration, to prevent the axial translational movement of the shutter 15 in the opening direction of the valve passage when this is closed.

In one embodiment shown for example in figures 4A to 4C, the shutter 15 comprises an enlarged segment 151, preferably of annular shape, which abuts the abutting element 19 when the shutter 15 is urged in an axial direction and is closed.

In this way, in order to be able to open the valve passage it is necessary to rotate the shutter 15 so as to prevent the abutting element 19 from blocking the axial movement.

In accordance with a preferred embodiment, the enlarged segment 151 and the abutting element 19 are shaped such that the former slides over the latter abutting element 19 during the rotation of the shutter 15, and, in other words, as the valve passage opens.

This sliding action can be obtained for example by means of sliding between an inclined surface 190 defined on the abutting element and the enlarged segment 151.

To this end, the inclined surface 190, shown schematically in figure 3, is shaped such that, during the axial translational movement of the valve determined by the conversion mechanism 17, the enlarged segment 151 remains in contact with the inclined surface 190.

This feature can be realised for example by adopting an inclined surface extending in a helical manner.

In order to maintain the contact, the enlarged segment 151 also preferably has an auxiliary inclined surface 192, the shape of which is complementary to that of the inclined surface 190.

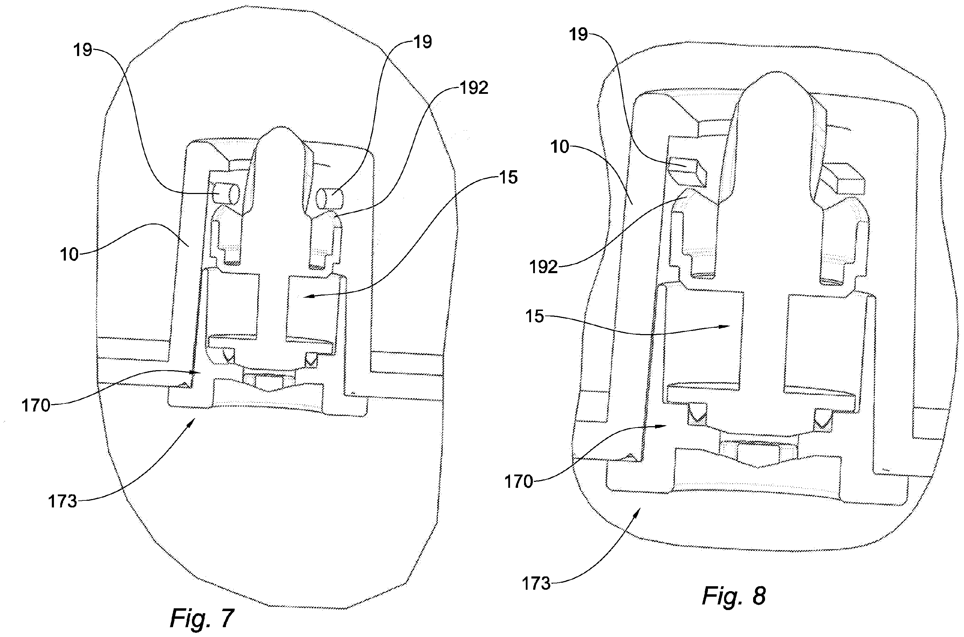

In an alternative embodiment, the contact between the enlarged segment and the abutting element 19 is instead interrupted during the rotation of the shutter 15. This can be obtained with the solutions shown for example in figure 7, where the abutting element 19 extends in the manner of a pin from the inner surface of the sleeve portion 10, or, as shown in figure 8, where the abutting element 19 is in the form of a protuberance extending in the manner of a segment on which the inclined surface 190 is defined.

With reference again to figures 2A, 3 and 4A, in accordance with a preferred embodiment, the abutting element 19 and the enlarged segment 151 have a plurality of ridges and recesses extending in series around the axis of rotation of the valve 15.

This feature is particularly advantageous in the case in which the conversion mechanism 17 comprises a second pair of inclined surfaces 171, 172 which have shapes complementary to one another and are capable of coming into contact with one another so as to close/open the valve passage. To this end, the surfaces 171, 172 are in full contact with one another when the valve is closed and are only in partial contact with one another when the valve is open.

In this second configuration, an opening is in fact defined between the closure portion 170 and a bottom wall 18 of the shutter 15, which opening is capable of allowing water to pass in the direction of the lower basin.

To this end, the surfaces 171, 172 are formed, respectively, on the closure portion 170 of the valve passage 9 and on the bottom wall 18 of the shutter 15. In this case as well, the surfaces 171, 172 can define a plurality of ridges and recesses distributed around the axis X.

To promote the rotation of the shutter 15 and at the same time provide the contact between the surfaces 171, 172, these surfaces can extend in a helical manner around the axis of rotation X of the shutter 15.

In accordance with a preferred embodiment, the surfaces 171, 172 extend in a manner similar to that of the surfaces formed on the abutting element 19 and on the enlarged segment 151, which surfaces are offset angularly such that, when the valve is closed, the surfaces 171, 172 are in full contact with one another and the other surfaces are in partial contact. In this way, the rotation and subsequent axial translational movement following said rotation will be permitted.

In one embodiment, the conversion mechanism 17 is formed on a support element 173 of the valve 15 that is fitted in a cap manner in said valve passage 9 from the side opposite the side on which the cartridge is introduced 9.

In this case, the abutting element 19 is formed in said support element 173 in a position opposite a closure portion 170 of the valve passage.

In general, the abutting element 19 and the closure portion 170 can define two guide surfaces between which the enlarged segment, or another portion, of the shutter 15 slides, which shutter is thus guided in respect of its translational movements along the axis X. Thus, the movement along the axis X of the shutter 15, at least in its closed position, is controlled by means of such guide surfaces. It is also noted that the guide surfaces can be defined in portions other than those described above, as will be seen in the embodiments presented hereinafter.

The support element 173 can also comprise a filter situated downstream of the shutter 15, which prevents access from the side opposite the side of the seat 5 for the cartridge.

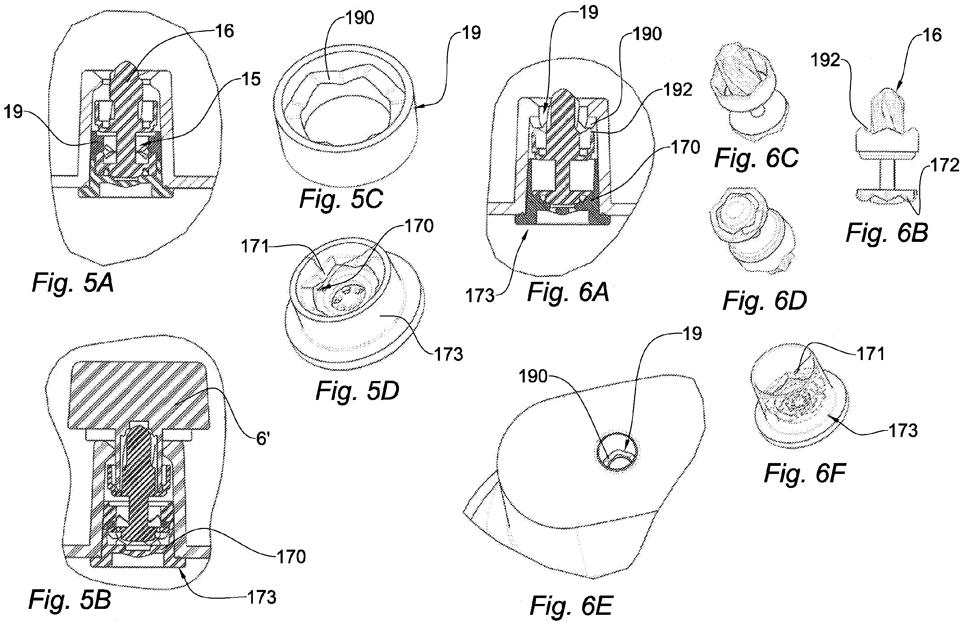

In one variant, shown in figures 5A to 5C, the abutting element 19 is formed on an internal wall of the sleeve portion 10 of the valve passage 9. In this case, the abutting element can be formed both as a separate element, fixed to the internal wall, and as a single body formed integrally with the sleeve portion.

In a further variant, shown in figures 6A to 6F, the abutting element 19 is formed at an inlet mouth of the sleeve portion 10.

Such embodiments allow a particularly simple assembly of the shutter 15 in the valve passage.

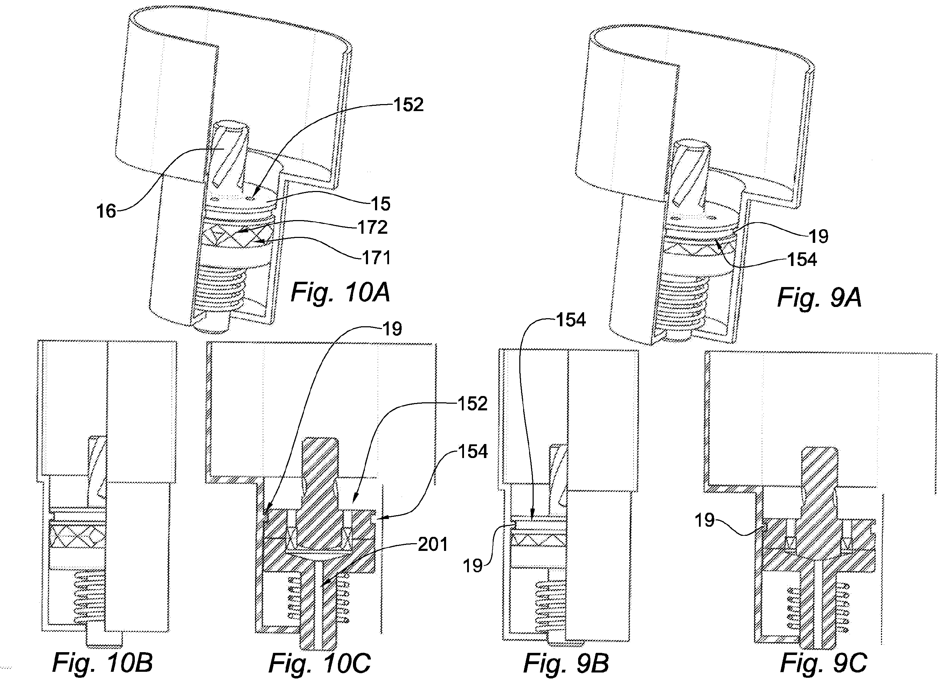

With reference now to figures 9A to 10C, which form the basis of a further variant, the shutter 15 is constrained to rotate by means of the abutting element 19, the abutting element more specifically defining a guide surface by means of which the shutter can rotate but cannot move in translation. To this end, the shutter 15 can have a groove 154 provided in the form of a ring, within which the abutting element 19 is housed. In this case as well, the guide surface is a double guide surface, which controls the translational movement in the direction of the axis X of the shutter 15, in this case blocking such movement.

In other words, in the present embodiment the shutter 15 can rotate around the axis X, but is prevented from performing translational movements along said axis.

The rotation of the shutter 15, which can be implemented in the same manner as described in the previous exemplary embodiments, makes it possible to act on an outlet body 200, urging it towards the bottom by means of a movement conversion mechanism similar to that described above. With reference for example to figure 10A, the rotation of the shutter 15 generates the contact between the surfaces 171 and 172, urging the outlet body 200 towards the bottom, said body, unlike the shutter 15, being free to move axially and being constrained to rotate.

In one embodiment, the shutter 15 is provided with at least one hole 152, which is placed in communication with an outlet duct 201 when the shutter 15 is open. The outlet duct 201 opens out into the lower basin, so as to allow filtered water to pass towards the relative collection basin.

Vice versa, when the shutter is in the closed position, shown for example in figure 9C, the hole 152 is closed off from contact with the surface of the outlet body 200.

For the purpose of urging the outlet body 200 into a closed position, a spring or other equivalent resilient device can be advantageously used, which urges the body 200 towards the top.

In this case as well, the abutting element thus prevents the translational movement of the shutter 15, providing smaller degrees of freedom and thus greater precision and reliability of the opening of the valve passage.

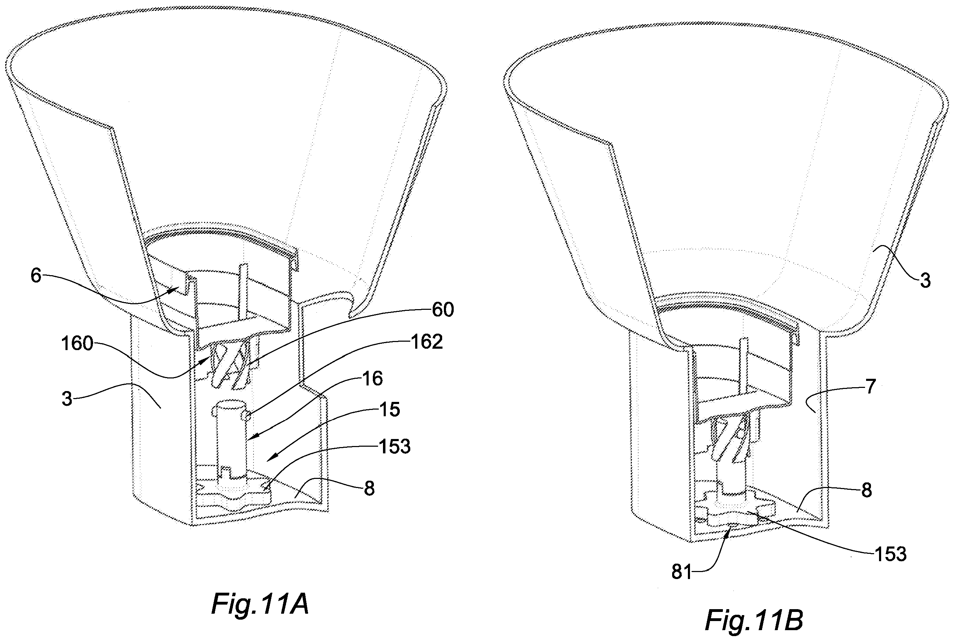

A further variant is described in figures 11A and 11B, in which the translational movement of the shutter 15 is prevented, similarly to the case described with reference to figures 9A-C and 10A-C.

In this case as well, however, the shutter 15 has at least one radial extension 153 which, when rotated, can selectively overlap with a corresponding hole 81 formed in the bottom 8 of the divider 3, thereby closing the passage, or leaving it open. The two configurations are shown in figures 11A and 11B, respectively.

In the present embodiment, the position of the recesses 160 and ribs 61 is opposite that of the previous exemplary embodiments, with the ribs 61 provided in the form of pins that extend radially from the manoeuvring portion 16 and the recesses 160 defined on the appendage 60 of the cartridge, shown only partially in the drawings, or of the enabler element.

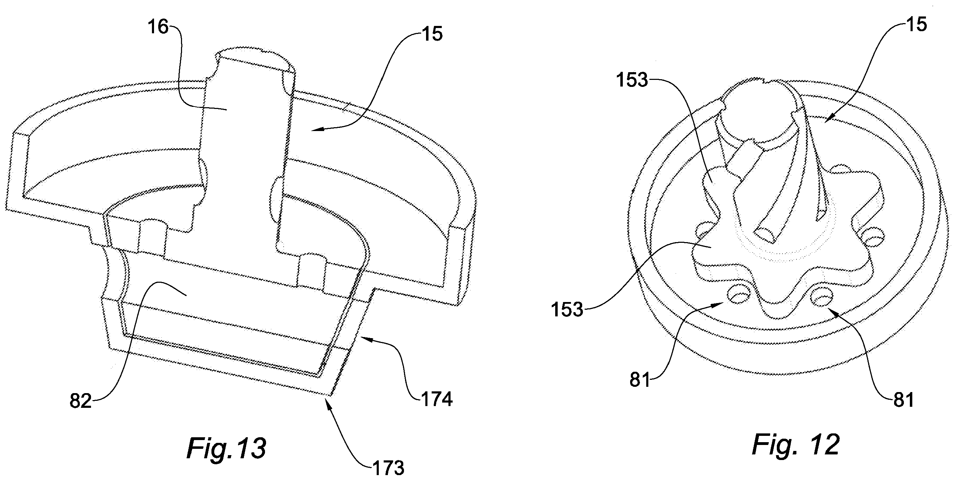

It should be noted that such a solution can also be adopted in the other embodiments of the filtration device according to the present invention. Further variants in which the shutter 15 is constrained to rotate are described in figures 12 to 14.

In the version in figure 12, the shutter 15 has a plurality of radial extensions 153 with corresponding holes 81 formed on the bottom 8. The shutter in this case is provided with recesses 160 as in the embodiment of figure 1.

In figure 13, the shutter 15 is provided with a transverse passage 82 that can be placed in communication with corresponding openings 174 formed on a side wall of the support element 173.

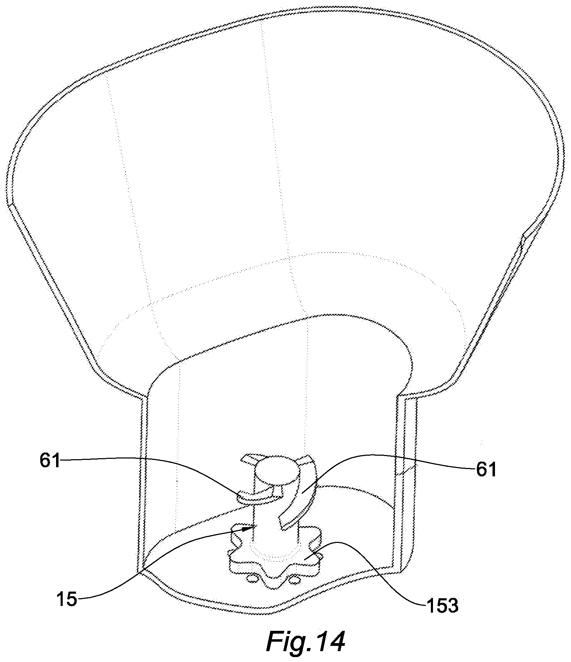

A further version is shown in figure 14, where the shutter 15, formed in a manner similar to that shown in figure 11A, has ribs 61 shaped as surfaces which extend in a helical manner.

It is clear in any case that these further embodiments can be combined with the previous embodiments.

## Claims

1. Percolation-type filtration device (1) comprising a divider (3) that divides the device (1) into an upper basin (4a), which collects water to be filtered, and a lower basin (4b) that collects filtered water, the two basins (4a, b) communicating with one another via a duct defined in said divider, said duct forming a seat (5) for receiving a filter cartridge (6), a valve passage (9) being defined in said divider (3) and comprising a flow shut-off valve for selectively allowing/preventing the passage of liquid between the upper basin (4a) and the lower basin (4b), said flow shut-off valve being designed to be opened by rotating a relative shutter (15), said valve passage (9) comprising a closure portion (170) on which said shutter (15) rests when closed, wherein said shutter (15) is rotatable around an axis of rotation (X) parallel to said valve passage (9), said flow shut-off valve being designed such that it can be opened by rotating the shutter (15) around said axis of rotation (X), **characterised in that** said device comprises an abutting element (19) configured to prevent an axial translational movement of the shutter (15) along said axis of rotation (X) away from the closure portion (170) of the valve passage (9) when said shutter (15) is closed.

2. Percolation-type filtration device (1) according to claim 1, wherein said shutter (15) comprises an enlarged segment (151) which abuts said abutting element (19) when said shutter (15) is closed and it is urged in an axial direction towards an open position.

3. Percolation-type filtration device (1) according to claim 2, wherein said abutting element (19) is in a position opposite said closure portion (170) with respect to said enlarged segment (151).

4. Percolation-type filtration device (1) according to either claim 2 or claim 3, wherein said enlarged segment (151) and said abutting element (19) are shaped such that said enlarged segment (151) slides over said abutting element (19) as the valve opens.

5. Percolation-type filtration device (1) according to any one of claims 2 to 4, wherein said abutting element (19) comprises an inclined surface (190) shaped such that, during an axial translational movement of the shutter (15) associated with the rotation of said shutter, said enlarged segment (151) stays in contact with said inclined surface (190).

6. Percolation-type filtration device (1) according to claim 5, wherein said enlarged segment (151) comprises an auxiliary inclined surface (192), the shape of which is complementary to that of said inclined surface (190).

7. Percolation-type filtration device (1) according to any one of the preceding claims, further comprising a conversion mechanism (17) for converting a rotary motion of the shutter (15) into an axial translational movement such that said shutter (15), when rotated around said axis of rotation (X), is moved in a translational manner in a direction parallel to the axis of rotation (X) and is moved away from a closure portion (170) formed in said valve passage (9).

8. Percolation-type filtration device (1) according to claim 7 when dependent on any one of claims 2 to 6, wherein said abutting element (19) and said enlarged segment (151) comprise a plurality of ridges and recesses extending in series around the axis of rotation of said shutter (15).

9. Percolation-type filtration device (1) according to either claim 7 or claim 8, wherein said conversion mechanism (17) is formed on a support element (173) of said shutter (15).

10. Percolation-type filtration device (1) according to claim 9, wherein said support element (173) is fitted in a cap manner in said valve passage (9) from the side opposite the side on which the cartridge can be introduced.

11. Percolation-type filtration device (1) according to either claim 9 or claim 10, wherein said abutting element (19) is made in said support element (173) in a position opposite the closure portion (170) of said shutter (15).

12. Percolation-type filtration device (1) according to any one of claims 7 to 11, wherein said conversion mechanism converts a rotary movement about said axis (X) that is parallel to said valve passage into a vertical translational movement along said axis.

13. Percolation-type filtration device (1) according to any one of claims 7 to 12, wherein said conversion mechanism comprises a second pair of inclined surfaces (171, 172) having complementary shapes, said surfaces (171, 172) being in full contact with one another when the valve is closed and only being in partial contact with one another when the valve is open.

14. Percolation-type filtration device (1) according to any one of the preceding claims, wherein said abutting element (19) is made at one end of a sleeve portion (10) of the valve passage (9).

15. Percolation-type filtration device (1) according to any one of the preceding claims, wherein said abutting element (19) is designed so as to prevent an axial translational movement towards the top of the shutter (15).

## Patentansprüche

1. Filtrationsvorrichtung vom Perkolationstyp (1) mit einem Teiler (3), der die Vorrichtung (1) in ein oberes Becken (4a), das zu filterndes Wasser sammelt, und ein unteres Becken (4b) teilt, das gefiltertes Wasser sammelt, wobei die beiden Becken (4a, b) über einen im Teiler ausgebildeten Kanal miteinander kommunizieren, wobei der Kanal einen Sitz (5) zum Aufnehmen einer Filterpatrone (6) bildet, wobei ein Ventildurchgang (9) im Teiler (3) ausgebildet ist und ein Durchfluss-Absperrventil zum selektiven Ermöglichen / Verhindern des Durchgangs von Flüssigkeit zwischen dem oberen Becken (4a) und dem unteren Becken (4b) aufweist, wobei das Durchfluss-Absperrventil ausgebildet ist, um durch Drehen eines entsprechenden Verschlusses (15) geöffnet zu werden, wobei der Ventildurchgang (9) einen Verschlussabschnitt (170) aufweist, auf dem der Verschluss (15) ruht, wenn er geschlossen ist, wobei der Verschluss (15) um eine Drehachse (X) parallel zum Ventildurchgang (9) drehbar ist, wobei das Durchfluss-Absperrventil ausgebildet ist, so dass es durch Drehen des Verschlusses (15) um die Drehachse (X) geöffnet werden kann, **dadurch gekennzeichnet, dass** die Vorrichtung ein Anlageelement (19) aufweist, das eingerichtet ist, um eine axiale Translationsbewegung des Verschlusses (15) entlang der Drehachse (X) weg vom Verschlussabschnitt (170) des Ventildurchgangs (9) zu verhindern, wenn der Verschluss (15) geschlossen ist.

2. Filtrationsvorrichtung vom Perkolationstyp (1) nach Anspruch 1, wobei der Verschluss (15) ein vergrößertes Segment (151) aufweist, das am Anlageelement (19) anliegt, wenn der Verschluss (15) geschlossen ist, und in eine axiale Richtung zu einer offenen Position gedrückt wird.

3. Filtrationsvorrichtung vom Perkolationstyp (1) nach Anspruch 2, wobei sich das Anlageelement (19) in einer Position gegenüber dem Verschlussabschnitt (170) in Bezug auf das vergrößerte Segment (151) befindet.

4. Filtrationsvorrichtung vom Perkolationstyp (1) nach Anspruch 2 oder 3, wobei das vergrößerte Segment (151) und das Anlageelement (19) ausgebildet sind, so dass das vergrößerte Segment (151) über das Anlageelement (19) gleitet, wenn sich das Ventil öffnet.

5. Filtrationsvorrichtung vom Perkolationstyp (1) nach einem der Ansprüche 2 bis 4, wobei das Anlageelement (19) eine geneigte Oberfläche (190) aufweist, die ausgebildet ist, so dass während einer axialen Translationsbewegung des Verschlusses (15) in Verbindung mit der Drehung des Verschlusses das vergrößerte Segment (151) in Kontakt mit der geneigten Oberfläche (190) bleibt.

6. Filtrationsvorrichtung vom Perkolationstyp (1) nach Anspruch 5, wobei das vergrößerte Segment (151) eine zusätzliche geneigte Oberfläche (192) aufweist, deren Form zur geneigten Oberfläche (190) komplementär ist.

7. Filtrationsvorrichtung vom Perkolationstyp (1) nach einem der vorhergehenden Ansprüche, das ferner einen Umwandlungsmechanismus (17) zum Umwandeln einer Drehbewegung des Verschlusses (15) in eine axiale Translationsbewegung aufweist, so dass der Verschluss (15) beim Drehen um die Drehachse (X) translatorisch in eine Richtung parallel zur Drehachse (X) bewegt und weg von einem Verschlussabschnitt (170) bewegt wird, der im Ventildurchgang (9) ausgebildet ist.

8. Filtrationsvorrichtung vom Perkolationstyp (1) nach Anspruch 7, in Abhängigkeit von einem der Ansprüche 2 bis 6, wobei das Anlageelement (19) und das vergrößerte Segment (151) eine Mehrzahl von Rippen und Aussparungen aufweisen, die sich in Reihe einander um die Drehachse des Verschlusses (15) erstrecken.

9. Filtrationsvorrichtung vom Perkolationstyp (1) nach Anspruch 7 oder 8, wobei der Umwandlungsmechanismus (17) auf einem Trägerelement (173) des Verschlusses (15) ausgebildet ist.

10. Filtrationsvorrichtung vom Perkolationstyp (1) nach Anspruch 9, wobei das Trägerelement (173) kappenartig im Ventildurchgang (9) von der Seite gegenüber der Seite eingepasst ist, auf der die Patrone eingeführt werden kann.

11. Filtrationsvorrichtung vom Perkolationstyp (1) nach Anspruch 9 oder 10, wobei das Anlageelement (19) im Trägerelement (173) in einer Position gegenüber dem Verschlussabschnitt (170) des Verschlusses (15) hergestellt ist.

12. Filtrationsvorrichtung vom Perkolationstyp (1) nach einem der Ansprüche 7 bis 11, wobei der Umwandlungsmechanismus eine Drehbewegung um die Achse (X), die parallel zum Ventildurchgang ist, in eine vertikale Translationsbewegung entlang der Achse umwandelt.

13. Filtrationsvorrichtung vom Perkolationstyp (1) nach einem der Ansprüche 7 bis 12, wobei der Umwandlungsmechanismus ein zweites Paar geneigter Oberflächen (171, 172) mit komplementären Formen aufweist, wobei die Oberflächen (171, 172) vollständig in Kontakt miteinander stehen, wenn das Ventil geschlossen ist, und nur teilweise miteinander in Kontakt stehen, wenn das Ventil geöffnet ist.

14. Filtrationsvorrichtung vom Perkolationstyp (1) nach einem der vorhergehenden Ansprüche, wobei das Anlageelement (19) an einem Ende eines Hülsenabschnitts (10) des Ventildurchgangs (9) hergestellt ist.

15. Filtrationsvorrichtung vom Perkolationstyp (1) nach einem der vorhergehenden Ansprüche, wobei das Anlageelement (19) ausgebildet ist, um so eine axiale Translationsbewegung in Richtung der Oberseite des Verschlusses (15) zu verhindern.

## Revendications

1. Dispositif (1) de filtration de type à percolation comprenant un diviseur (3) qui divise le dispositif (1) en un bassin supérieur (4a), qui collecte l'eau à filtrer, et un bassin inférieur (4b) qui collecte l'eau filtrée, les deux bassins (4a, b) communiquant l'un avec l'autre via un conduit défini dans ledit diviseur, ledit conduit formant un siège (5) pour recevoir une cartouche filtrante (6), un passage de vanne (9) étant défini dans ledit diviseur (3) et comprenant un robinet d'arrêt d'écoulement pour permettre/empêcher sélectivement le passage d'un liquide entre le bassin supérieur (4a) et le bassin inférieur (4b), ledit robinet d'arrêt d'écoulement étant conçu pour être ouvert par la rotation d'un obturateur (15) relatif, ledit passage de vanne (9) comprenant une partie de fermeture (170) sur laquelle ledit obturateur (15) repose lors d'une fermeture, dans lequel ledit obturateur (15) peut tourner autour d'un axe de rotation (X) parallèle audit passage de vanne (9), ledit robinet d'arrêt d'écoulement étant conçu de telle sorte qu'il peut être ouvert en faisant tourner l'obturateur (15) autour dudit axe de rotation (X), **caractérisé en ce que** ledit dispositif comprend un élément formant butée (19) configuré pour empêcher un mouvement de translation axiale de l'obturateur (15) le long dudit axe de rotation (X) à l'opposé de la partie de fermeture (170) du passage de vanne (9) quand ledit obturateur (15) est fermé.

2. Dispositif (1) de filtration de type à percolation selon la revendication 1, dans lequel ledit obturateur (15) comprend un segment agrandi (151) qui vient buter sur ledit élément formant butée (19) quand ledit obturateur (15) est fermé et qu'il est poussé dans une direction axiale vers une position ouverte.

3. Dispositif (1) de filtration de type à percolation selon la revendication 2, dans lequel ledit élément formant butée (19) est dans une position opposée à ladite partie de fermeture (170) par rapport audit segment agrandi (151).

4. Dispositif (1) de filtration de type à percolation selon la revendication 2 ou la revendication 3, dans lequel ledit segment agrandi (151) et ledit élément formant butée (19) sont formés de telle sorte que ledit segment agrandi (151) glisse sur ledit élément formant butée (19) lorsque la vanne s'ouvre.

5. Dispositif (1) de filtration de type à percolation selon l'une quelconque des revendications 2 à 4, dans lequel ledit élément formant butée (19) comprend une surface inclinée (190) formée de telle sorte que, lors d'un mouvement de translation axiale de l'obturateur (15) associé à la rotation dudit obturateur, ledit segment agrandi (151) reste en contact avec ladite surface inclinée (190).

6. Dispositif (1) de filtration de type à percolation selon la revendication 5, dans lequel ledit segment agrandi (151) comprend une surface inclinée auxiliaire (192), dont la forme est complémentaire de celle de ladite surface inclinée (190).

7. Dispositif (1) de filtration de type à percolation selon l'une quelconque des revendications précédentes, comprenant en outre un mécanisme de conversion (17) pour convertir un mouvement de rotation de l'obturateur (15) en un mouvement de translation axiale de telle sorte que ledit obturateur (15), lorsqu'il est tourné autour dudit axe de rotation (X), est déplacé d'une manière en translation dans une direction parallèle à l'axe de rotation (X) et est éloigné d'une partie de fermeture (170) formée dans ledit passage de vanne (9).

8. Dispositif (1) de filtration de type à percolation selon la revendication 7 quand elle dépend de l'une quelconque des revendications 2 à 6, dans lequel ledit élément formant butée (19) et ledit segment agrandi (151) comprennent une pluralité de crêtes et de renfoncements s'étendant en série autour de l'axe de rotation dudit obturateur (15).

9. Dispositif (1) de filtration de type à percolation selon la revendication 7 ou la revendication 8, dans lequel ledit mécanisme de conversion (17) est formé sur un élément de support (173) dudit obturateur (15).

10. Dispositif (1) de filtration de type à percolation selon la revendication 9, dans lequel ledit élément de support (173) est monté à la manière d'un capuchon dans ledit passage de vanne (9) à partir du côté opposé au côté sur lequel la cartouche peut être introduite.

11. Dispositif (1) de filtration de type à percolation selon la revendication 9 ou la revendication 10, dans lequel ledit élément formant butée (19) est réalisé dans ledit élément de support (173) dans une position opposée à la partie de fermeture (170) dudit obturateur (15).

12. Dispositif (1) de filtration de type à percolation selon l'une quelconque des revendications 7 à 11, dans lequel ledit mécanisme de conversion convertit un mouvement de rotation autour dudit axe (X) qui est parallèle audit passage de vanne en un mouvement de translation verticale le long dudit axe.

13. Dispositif (1) de filtration de type à percolation selon l'une quelconque des revendications 7 à 12, dans lequel ledit mécanisme de conversion comprend une seconde paire de surfaces (171, 172) inclinées ayant des formes complémentaires, lesdites surfaces (171, 172) étant en contact total l'une avec l'autre quand la vanne est fermée et n'étant seulement qu'en contact partiel l'une avec l'autre quand la vanne est ouverte.

14. Dispositif (1) de filtration de type à percolation selon l'une quelconque des revendications précédentes, dans lequel ledit élément formant butée (19) est réalisé à une extrémité d'une partie de manchon (10) du passage de vanne (9).

15. Dispositif (1) de filtration de type à percolation selon l'une quelconque des revendications précédentes, dans lequel ledit élément formant butée (19) est conçu de manière à empêcher un mouvement de translation axiale vers le haut de l'obturateur (15).
